## Europäisches Patentamt

## European Patent Office

## Office européen des brevets

(19)

(11) Veröffentlichungsnummer: **0 246 440**
**A2**

# (12) EUROPÄISCHE PATENTANMELDUNG

(21) Anmeldenummer: **87105174.4**

(22) Anmeldetag: **08.04.87**

(51) Int. Cl.³: **A 22 C 11/08**

(30) Priorität: **23.05.86 DE 3617396**

(43) Veröffentlichungstag der Anmeldung:
**25.11.87 Patentblatt 87/48**

(84) Benannte Vertragsstaaten:
**AT BE CH DE ES FR GB IT LI LU NL SE**

(71) Anmelder: **NORDISCHER MASCHINENBAU RUD.
BAADER GMBH + CO KG
Geniner Strasse 249
D-2400 Lübeck(DE)**

(72) Erfinder: **Mette, Manfred, Dr.-Ing.
Ringstrasse 19 b
D-2000 Hamburg 73(DE)**

(54) Vorrichtung zum Fördern pastenartiger Massen.

(57) Die Erfindung betrifft eine Vorrichtung zum Fördern pastenartiger Massen, beispielsweise Wurstbrät. Ausgehend von einem Radialkolbenförderer für eine drehwinkelproportionale Abgabe von Portionen, die durch Ausbildung des den Masseausstoß steuernden Abschnittes der Steuerkurve als Kreisevolvente ermöglicht wird, wird vorgeschlagen, die bei dieser Ausführung an jedem Verdrängerkolben im Augenblick des Beginns seiner Förderung wirksamen hohen, theoretisch unendlich hohen Beschleunigungskräfte dadurch abzubauen, daß der Evolventenabschnitt der Steuerkurve eine Anlaufund eine Ablaufzone erhält, deren Verläufe spiegelbildlich zueinander ausgestaltet sind. Dabei ist deren Anordnung so getroffen, daß im Augenblick des Auflaufes eines Verdrängerkolbens auf diese Auflaufzone der vorauslaufende in die genannte Ablaufzone eintritt, so daß während des Durchlaufens dieser Kurventeile jeweils zwei Verdrängerkolben an dem Masseausstoß beteiligt sind. Die Beschleunigungswerte derselben addieren sich dabei zu Null.

Fig. 1

EP 0 246 440 A2

## Vorrichtung zum Fördern pastenartiger Massen

Die Erfindung betrifft eine Vorrichtung zum Ausbringen gewichts- und/oder volumengleicher Portionen einer pastenartigen Masse, insbeondere Wurstbrät, mit einem Förderwerk, bestehend aus einem angetriebenen, in einem Gehäuse mit einer Zuführ- und einer Abgabeöffnung gelagerten Rotor mit Portionskammern, in denen Verdrängerkolben durch Abstützung gegenüber einer stationären Steuerkurve verschiebbar angeordnet sind, wobei diese einen die Ausstoßbewegung der _____ ___ _____ _____ _____ Verdrängerkolben steuernden Abschnitt umfaßt, so daß sich über einer Volldrehung des Rotors jeweils Proportionalität zwischen Masseausstoß und Drehwinkel des Rotors ergibt.

Die dem Erfindungsbetreff zugrundeliegende Vorrichtung ist aus der DE-OS 34 09 517 bekannt. Das dort offenbarte Förderwerk für pastenartige Massen weist die Merkmale einer Radialkolbenpumpe auf, bei welcher die radiale Verschiebebewegung der Verdrängerkolben durch eine ortsfeste Steuerkurve erfolgt, auf welcher sich die Verdrängerkolben während des Umlaufs des dieselben aufnehmenden Rotors abstützen. Dabei ist die Anordnung der Verdrängerkolben in Abstimmung mit der Lage der Abgabeöffnung des Gehäuses sowie die Zuordnung des Abschnittes der Steuerkurve, der für den Portionierhub der Verdrängerkolben verantwortlich ist, so getroffen, daß die Ausstoßbewegung eines derselben in dem Augenblick beginnt, wenn der vorauslaufende seine Ausstoßbewegung beendet hat. Im Hinblick auf das gesteckte Ziel, Proportionalität zwischen Fördervolumen und Drehwinkel des Rotors zu erreichen, ergeben sich sowohl für den Beginn der Ausstoßbewegung eines Verdrängerkolbens, als auch für das Ende der Ausstoßbewegung des vorauslaufenden theoretisch unendlich hohe Beschleunigungswerte an den letztgenannten. Aufgrund der Elastizität des Systems werden diese Werte praktisch natürlich nicht erreicht, doch sind diese derartig hoch, daß das bekannte Förderwerk sehr rauh läuft, was unangenehme Geräuschentwicklung und überdurchschnittlichen Verschleiß zur Folge hat. Darüberhinaus bewirken die in der Praxis sich einstellenden Abweichungen des Bewegungsablaufes von der theoretischen Vorgabe Schwankungen der Dosiergenauigkeit.

Es ist daher die Aufgabe der vorliegenden Erfindung, ein Rotations-Förderwerk mit zu seinem Drehwinkel proportionaler Fördercharakteristik vorzuschlagen, welches stoßfrei und damit verschleiß- und geräuscharm läuft.

Diese Aufgabe wird erfindungsgemäß dadurch gelöst, daß der die Ausstoßbewegung der Verdrängerkolben steuernde Abschnitt der Steuerkurve eine Anlaufzone, einen Evolventenabschnitt und eine Ablaufzone umfaßt, wobei die Anlaufzone und die Ablaufzone derart gestaltet sind, daß das jeweilige Summenmaß der zwischen den Abstützpunkten der sich jeweils in diesen Bereichen der Steuerkurve abstützenden Verdrängerkolben und der Achse zu denkenden Berührungsradien einer von dem Drehwinkel $\mathcal{J}$ des Rotors abhängigen linearen Funktion folgt.

Die damit erzielbaren Vorteile bestehen insbesondere darin, daß der Bewegungsablauf der Verdrängerkolben unabhängig von der aufgabengemäß zu realisierenden Proportionalität zwischen Fördervolumen und Drehwinkel unter dem Gesichtspunkt geringstmöglicher Belastung optimiert werden kann.

Eine bevorzugte Ausgestaltung ist in einem Radialkolbenförderwerk verwirklicht, bei welchem der in dem Gehäuse des Förderwerkes gelagerte Rotor mit mindestens sechs radial angeordneten Portionskammern mit in diesen verschiebbar geführten Verdrängerkolben versehen ist, und die Steuerkurve die zur Achse des Rotors weisenden Unterflächen der Verdrängerkolben abstützend angeordnet ist.

Eine sehr einfache Ausführung ergibt sich, wenn einander gegenüberliegende Verdrängerkolben starr miteinander verbunden sind, da auf diese Weise lediglich eine die Ausstoßbewegung der Verdrängerkolben steuernde Steuerkurve erforderlich ist, die dann gleichzeitig die Rückzugsbewegung der gegenüberliegenden Verdrängerkolben zum Füllen der Portionskammern bewirkt.

Die Erfindung wird nachfolgend anhand der Zeichnung näher erläutert.

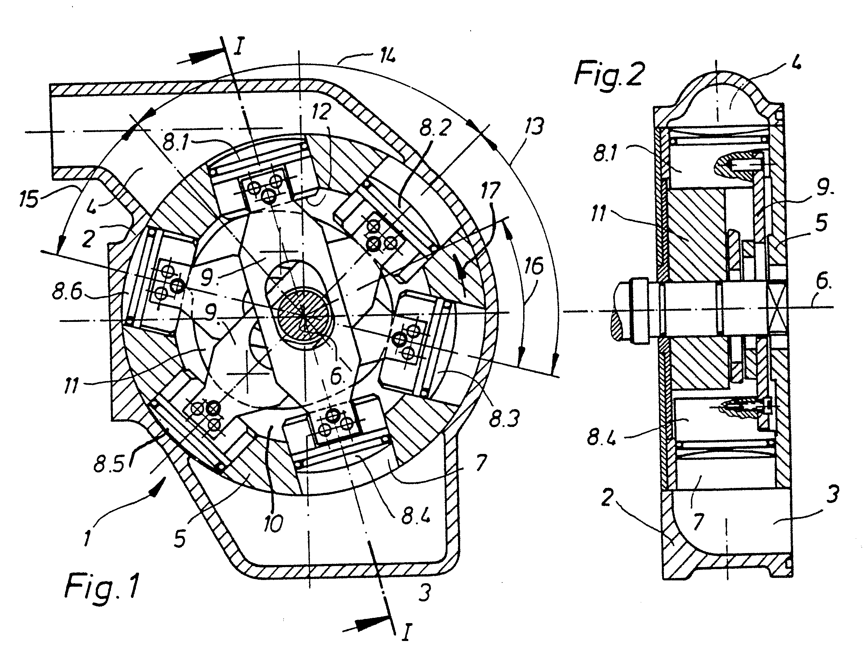

Es zeigt      Fig. 1   eine geschnittene Draufsicht auf ein Radialkolbenförderwerk,

Fig. 2   einen zentralen Querschnitt I - I durch das Förderwerk längs der Achse eines Verdrängerkolben-Paares,

Fig. 3   das Bewegungsdiagramm der Verdrängerkolben.

Gemäß Fig. 1 ist das Gehäuse 2 eines Förderwerkes 1 mit einer Zuführung 3 und einer dieser etwa gegenüberliegenden Abgabeöffnung 4 ausgestattet. Das Gehäuse 2 umschließt einen radial wie axial selbstdichtend eingepaßten Rotor 5 , welcher auf geeignete Weise um eine Achse 6 umlaufend angetrieben ist. Der Rotor 5 weist mit ihren Mittelachsen zentral verlaufende, sich unter einem Winkel von 60$^{\circ}$ kreuzende, Portionskammern 7 bildende Bohrungen auf, welche der Aufnahme unter leichtem Schiebesitz eingepaßter Verdrängerkolben 8.1 bis 8.6 dienen. Jeweils zwei einander gegenüberliegende Verdrängerkolben sind auf geeignete Weise lösbar mittels Verbundstegen 9 zu Einheiten verbunden, die brückenartig

- 4 -

eine in einer zentralen Aussparung 10 des Rotors 5 Platz findende Steuerkurve 11 unter Abstützung der jeweiligen Unterflächen 12 der Verdrängerkolben 8.1 bis 8.6 auf der Peripherie der Steuerkurve 11 übergreifen. Diese umfaßt einen Kompressionsabschnitt 14 , welcher aus einem konzentrischen Abschnitt 13 hervorgeht und gegen den Uhrzeigersinn folgend eine Anlaufzone, einen Evolventenabschnitt und eine Ablaufzone umfaßt, die ihrerseits in einen konzentrischen Abschnitt 15 übergeht. Diesem folgt ein sich über einen Zentriwinkel von 180° erstreckender Abschnitt, der unter stetig abnehmendem Radius in den konzentrischen Abschnitt 13 überführt, wobei der Kurvenverlauf derart ist, daß die Durchmessermaße jeweils kleiner sind als der Abstand der Unterflächen 12 zweier miteinander verbundener Verdrängerkolben. Zur Vorverdichtung des aus der Zuführöffnung 3 übernommenen Fördergutes kann der konzentrische Abschnitt 13 zugunsten eines Vorkompressionsabschnittes 16 verkürzt sein, der dem auf diesen Abschnitt auflaufenden Verdrängerkolben einen definierten Vorhub erteilt. Die Zuführöffnung 3 und die Abgabeöffnung 4 liegen einander gegenüber, wobei ihre peripheren Ausdehnungen einen auf die Achse 6 bezogenen Zentriwinkel mit einem Winkelmaß umfassen, welches im wesentlichen demjenigen des Zentriwinkels entspricht, der den Kompressionsabschnitt 14 einschließt, so daß jeweils zwei aufeinanderfolgende Portionskammern 7 mit der Abgabeöffnung 4 bzw. Zuführöffnung 3 in Verbindung stehen.

Die in der Figur 1 dargestellte Funktionsphase sei Ausgangspunkt für die Betrachtung der Wirkungsweise: Das vorzugsweise unter leichtem Überdruck über die Zuführöffnung 3 in deren Bereich gegen den Rotor 5 strömende Füllgut hat entsprechend dieser Dar-

0246440

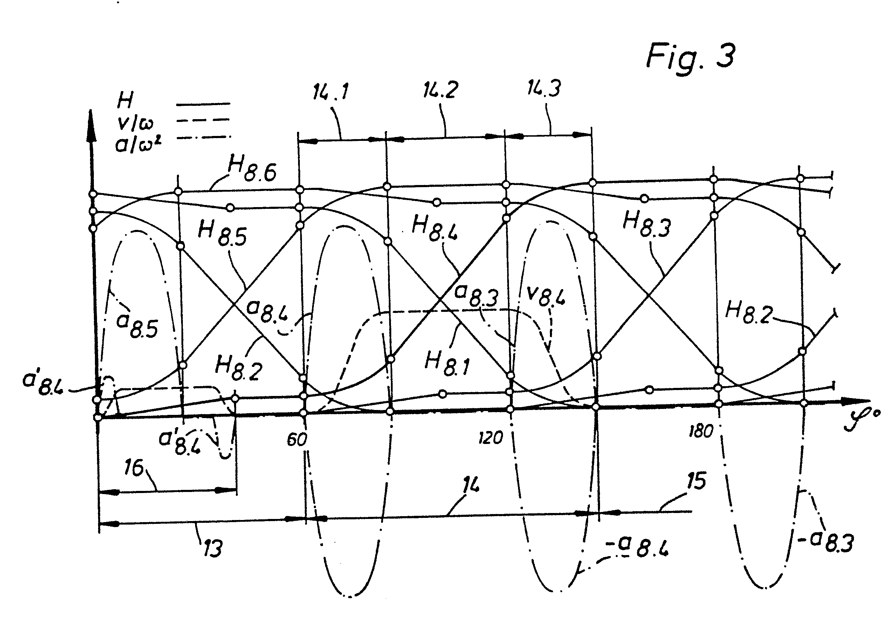

stellung die Portionskammer 7 vor dem nach unten weisenden Verdrängerkolben 8.4 gefüllt und steht vor dem soeben in den Bereich der Zuführöffnung 3 eingetretenen, in der Figur 1 links von diesem angeordneten Verdrängerkolben 8.5 . Wird der Rotor 5 in Richtung des Pfeiles 17 in Drehung versetzt, so wird der Verdrängerkolben 8.4 aufgrund des Kontaktes der Unterfläche 12 des mit diesem verbundenen Verdrängerkolbens 8.1 in seine Grundstellung zurückgezogen, d. h. in die für den Verdrängerkolben 8.3 gezeigte, so daß das Füllvolumen der Portionskammer 7 vor dem Verdrängerkolben 8.4 sein Maximum erreicht. Während des nun folgenden, den konzentrischen Abschnitt 13 der Steuerkurve 11 einschließenden Drehwinkels $\varphi$ des Rotors 5 hält der Verdrängerkolben 8.4 seine Grundstellung inne, bis dieser die Position des Verdrängerkolbens 8.2 erreicht hat. Für die Betrachtung der Vorgänge bei weiterer Drehung des Rotors 5 kann daher nun der Verdrängerkolben 8.2 weiterverfolgt werden, der im Begriff steht, durch Auflaufen seiner Unterfläche 12 auf den Kompressionsabschnitt 14 seinen Dosierhub zu absolvieren. Dieser beginnt mit dem Auflaufen auf die·Anlaufzone dieses Abschnittes, in welchem Augenblick der vorauslaufende Verdrängerkolben 8.1 die Ablaufzone erreicht hat und über diesen Teil des Kompressionsabschnittes 14 bezüglich seiner Hubgeschwindigkeit fortschreitend in dem Maße zurückgenommen wird, wie die des Verdrängerkolbens 8.2 gesteigert wird. Im Augenblick der Beendigung des Hubes des vorauslaufenden Verdrängerkolbens 8.1 hat derjenige 8.2 den an die Anlaufzone anschließenden Evolventenabschnitt erreicht und übernimmt nun vorübergehend allein den Ausstoß des Füllgutes. Die vorerwähnten, unter dem Kompressionsabschnitt 14 zusammengefaßten Abschnitte, das sind Anlauf- und Ablaufzone sowie Evolventenabschnitt der Steuerkurve 11 , sind aus Gründen der Übersichtlichkeit in Fig. 1 nicht bezeichnet. Sie finden sich aber in Fig. 3 , wobei die Anlaufzone den Drehwinkel 14.1 , der Evolventenabschnitt den Drehwinkel 14.2 und die Ablaufzone den Drehwinkel 14.3 umfassen.

Anhand der Fig. 3 wird nachfolgend noch einmal der Wirkungsablauf nachvollzogen. Es wird dabei wiederum der Verdrängerkolben 8.4 verfolgt, der zunächst entsprechend der Hublinie $H_{8.4}$ in dem Vorkompressionsabschnitt 16 unter mäßiger Beschleunigung $a'_{8.4}$ um einen definierten Hubbetrag unter Vorkompression des in der zugehörigen Portionskammer 7 befindlichen Füllgutes radial nach außen gegen das in diesem Bereich geschlossene Gehäuse 2 angehoben wird. Über den Rest des den Vorkompressionsabschnitt 16 mit umfassenden Abschnittes 13 wird die am Ende des vorletztgenannten Abschnittes 16 erreichte Hubposition beibehalten, nachdem die Hubgeschwindigkeit unter mäßiger Verzögerung $-a'_{8.4}$ zurückgenommen wurde. Der Verdrängerkolben 8.4 gelangt nunmehr über den Kompressionsabschnitt 14 der Steuerkurve 11 , über welchem Bereich die Portionskammer 7 mit der Abgabeöffnung 4 Verbindung hat, und beginnt unter mäßiger Beschleunigung $a_{8.4}$ während des Überlaufes der Anlaufzone 14.1 mit dem Ausstoß des Füllgutes aus der Portionskammer 7 . Gleichzeitig wurde der vorauslaufende Verdrängerkolben 8.3 durch Überlaufen der Ablaufzone 14.3 unter einer zu der Beschleunigung $a_{8.4}$ symmetrisch verlaufenden Verzögerung $-a_{8.3}$ in seiner Hubgeschwindigkeit zurückgenommen, und diese zum Ende des Kompressionsabschnittes 14 hin auf Null gebracht, was mit dem Erreichen des Hub-Maximums zusammenfällt. In diesem Augenblick ist der Verdrängerkolben 8.4 über den Evolventenabschnitt 14.2 gelangt, welcher dem erstgenannten die gleichförmige Hubgeschwindigkeit $v_{8.4}$ erteilt, d. h. seine Beschleunigung auf Null zurücknimmt. Der folgende Durchgang durch die Ablaufzone 14.3 verursacht eine Verzögerung $-a_{8.4}$ der Hubgeschwindigkeit, während welcher der nachfolgende Verdrängerkolben 8.5 bezüglich seiner Hubgeschwindigkeit symmetrisch zu der des Verdrängerkolbens 8.4 einer Beschleunigung $a_{8.5}$ dadurch unterworfen wird, daß dieser gleichzeitig die Anlaufzone 14.1 durchläuft. Diesem Bewegungsprofil wird jeder Verdrängerkolben gegenüber seinem vorauslaufenden mit einer Phasenverschiebung von 60° unterworfen, so daß während der Wirksamkeit der Anlaufzone 14.1 und Ablaufzone 14.3 jeweils zwei Verdrängerkolben an dem Masseausstoß beteiligt sind, während der Evolventenabschnitt 14.2 jeweils nur einen derselben zu betätigen hat. Erfolgt der Antrieb des Rotors 5 durch einen in seinem Drehwinkel überwachbaren Antriebsmotor, so läßt sich mit dem beschriebenen Förderer mit Hilfe einer Drehwinkel-Rückmeldung ein dem Ausstoßvolumen proportionales Signal ableiten. Es ist daher mit dieser Vorrichtung möglich, durch aufeinanderfolgendes Abfahren gleicher Drehwinkel gleiche Portionen zu erzeugen. Als am besten geeignet zeigt sich für diesen Antriebsfall der Schrittmotor.

Liste der benutzten Bezeichnungen　　0246440

1　　　Förderwerk

2　　　Gehäuse

3　　　Zuführöffnung

4　　　Abgabeöffnung

5　　　Rotor

6　　　Achse

7　　　Portionskammer

8.1　　Verdrängerkolben

8.2　　"　　　　　　"

8.3　　"　　　　　　"

8.4　　"　　　　　　"

8.5　　"　　　　　　"

8.6　　"　　　　　　"

9　　　Verbundsteg

10　　　Aussparung

11　　　Steuerkurve

12　　　Unterfläche

13　　　konzentrischer Abschnitt

14　　　Kompressionsabschnitt

14.1　　Anlaufzone

14.2　　Evolventenabschnitt

14.3　　Ablaufzone

15　　　konzentrischer Abschnitt

16　　　Vorkompressionsabschnitt

17　　　Pfeil

$\varphi$　　Drehwinkel des Rotors

$a'_{8.4}$　　Beschleunigung des Verdrängerkolbens　8.4

$a_{8.4}$　　"　　　"　　"　　"　　　"　8.4

$-a'_{8.4}$　　Verzögerung des Verdrängerkolbens　8.4

$-a_{8.4}$　　"　　　"　　"　　"　　　"　8.4

$v_{8.4}$　　Geschwindigkeit des Verdrängerkolbens 8.4

$H_{8.4}$　　Hub des Verdrängerkolbens　　8.4

Patentansprüche

1. Vorrichtung zum Ausbringen gewichts- und/oder volumengleicher Portionen einer pastenartigen Masse, insbesondere Wurstbrät, mit einem Förderwerk, bestehend aus einem angetriebenen, in einem Gehäuse mit einer Zuführ- und einer Abgabeöffnung gelagerten Rotor mit Portionskammern, in denen Verdrängerkolben durch Abstützung gegenüber einer stationären Steuerkurve verschiebbar angeordnet sind, wobei diese einen die Ausstoßbewegung der Verdrängerkolben steuernden Abschnitt umfaßt, so daß sich über einer Volldrehung des Rotors jeweils Proportionalität zwischen Masseausstoß und Drehwinkel des Rotors ergibt, g e - k e n n z e i c h n e t   d a d u r c h  , daß der die Ausstoßbewegung der Verdrängerkolben (8.1 bis 8.6) steuernde Abschnitt der Steuerkurve (11) eine Anlaufzone (14.1) , einen Evolventenabschnitt (14.2) und eine Ablaufzone (14.3.) umfaßt, wobei die Anlaufzone (14.1) und die Ablaufzone (14.3) derart gestaltet sind, daß das jeweilige Summenmaß der zwischen den Abstützpunkten der sich jeweils in diesen Bereichen der Steuerkurve (11) abstützenden Verdrängerkolben und der Achse (6) zu denkenden Berührungsradien einer von dem Drehwinkel $\varphi$ des Rotors (5) abhängigen linearen Funktion folgt.

2. Vorrichtung nach Anspruch 1 , g e k e n n - z e i c h n e t   d a d u r c h  , daß der in dem Gehäuse (2) des Förderwerkes gelagerte Rotor (5) mit mindestens sechs radial angeordneten Portionskammern (7) mit in diesen verschiebbar geführten Verdrängerkolben (8.1 bis 8.6) versehen ist, und die Steuerkurve (11) die zur Achse (6) des Rotors (5) weisenden Unterflächen (12) der Verdrängerkolben (8.1 bis 8.6) abstützend angeordnet ist.

3. Vorrichtung nach einem der Ansprüche 1 oder 2, g e k e n n z e i c h n e t   d a d u r c h , daß einander gegenüberliegende Verdrängerkolben (8.1 bis 8.6 ) starr miteinander verbunden sind.

Fig.2

Fig.1

Fig. 3